# EUROPEAN PATENT APPLICATION

(11) **EP 4 722 953 A1**
(43) Date of publication of application: **08.04.2026**
(21) Application number: 25206351.6
(22) Date of filing: 02.10.2025
(51) Int. Cl.: G06F 21/32, H04L 9/40, G06Q 20/40

(54) **IDENTITY AUTHENTICATION METHOD, IDENTITY AUTHENTICATION DEVICE, AND IDENTITY AUTHENTICATION SYSTEM**

(30) Priority: 04.10.2024 KR 20240135086; 21.11.2024 KR 20240167629
(71) Applicant: Ghost Pass Inc., Gwangju 61226 (KR)
(72) Inventor: Lee, Seon Gwan, Gwangju 61641 (KR)
(74) Representative: WSL Patentanwälte Partnerschaft mbB

(57) **Abstract**

Provided are an identity authentication method, an identity authentication device, and an identity authentication system. The identity authentication method may include transmitting, in response to receiving an authentication signal, a status update request signal to a server to trigger collection of authentication-purpose biometric data, downloading, in response to receiving a message about the collection of the authentication-purpose biometric data, the authentication-purpose biometric data from the server, and comparing the downloaded authentication-purpose biometric data with registered biometric data.

## Description

### BACKGROUND

### 1. Field

The present disclosure relates to an identity authentication method, an identity authentication device, and an identity authentication system.

### 2. Description of the Related Art

With recent advancements in smart device technology, including smart phones, and in network technology, it has become a common experience to collect biometric information through everyday devices such as smart devices or kiosks, and perform identity authentication to pay for products or gain entry.

Fundamentally, identity authentication is a procedure for preventing identity theft, and thus, security is the most important factor in identity authentication technology.

Accordingly, there is a continuous demand for the development of identity authentication technologies that may provide users with procedural convenience while maintaining a high level of security.

### SUMMARY

Provided are identity authentication methods, identity authentication devices, and identity authentication systems. The objectives of the present disclosure are not limited to the foregoing, and other unmentioned objects or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

Additional aspects will be set forth in part in the description which follows and, in part, will be apparent from the description, or may be learned by practice of the presented embodiments of the disclosure.

According to a first aspect of the present disclosure, an identity authentication method performed by an identity authentication device includes: in response to receiving an authentication signal, transmitting a status update request signal to a server to trigger collection of authentication-purpose biometric data; in response to receiving a message about the collection of the authentication-purpose biometric data, downloading the authentication-purpose biometric data from the server; and comparing the downloaded authentication-purpose biometric data with registered biometric data.

According to a second aspect of the present disclosure, an identity authentication device includes: a memory storing at least one program; and a processor configured to execute the at least one program to transmit, in response to receiving an authentication signal, a status update request signal to a server to trigger collection of authentication-purpose biometric data, download, in response to receiving a message about the collection of the authentication-purpose biometric data, the authentication-purpose biometric data from the server, and compare the downloaded authentication-purpose biometric data with registered biometric data.

According to a third aspect of the present disclosure, there may be provided a computer-readable recording medium having recorded thereon a program for causing a computer to execute the identity authentication method according to the first aspect.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic diagram illustrating an identity authentication system according to an embodiment of the present disclosure;
FIG. 2 is a conceptual diagram illustrating an example in which a user performs identity authentication in an identity authentication system, according to an embodiment of the present disclosure;
FIG. 3 is a flowchart for describing an identity authentication procedure according to an embodiment of the present disclosure;
FIG. 4 is a flowchart for describing an identity authentication procedure according to another embodiment of the present disclosure;
FIG. 5 is a flowchart for describing a process in which an identity authentication requesting device detects an approach of a user terminal, according to an embodiment of the present disclosure;
FIG. 6 is a conceptual diagram for describing an example of utilization of an identity authentication system, according to an embodiment of the present disclosure;
FIG. 7 is a conceptual diagram for describing an example of utilization of an identity authentication system, according to another embodiment of the present disclosure;
FIG. 8 is a flowchart of an identity authentication method according to an embodiment of the present disclosure; and
FIG. 9 is a block diagram of a device according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Advantages and features of the present disclosure and a method for achieving them will be apparent with reference to embodiments of the present disclosure described below together with the attached drawings. The present disclosure may, however, be embodied in many different forms and should not be construed as being limited to the embodiments set forth herein, and all changes, equivalents, and substitutes that do not depart from the spirit and technical scope of the present disclosure are encompassed in the present disclosure. These embodiments are provided such that the present disclosure will be thorough and complete, and will fully convey the concept of the present disclosure to those of skill in the art. In describing the present disclosure, detailed explanations of the related art are omitted when it is deemed that they may unnecessarily obscure the gist of the present disclosure.

Terms used herein are merely used to describe a particular embodiment, and are not intended to limit the present disclosure. The singular expression also includes the plural meaning as long as it is not inconsistent with the context. As used herein, terms such as "comprises," "includes," or "has" specify the presence of stated features, numbers, stages, operations, components, parts, or a combination thereof, but do not preclude the presence or addition of one or more other features, numbers, stages, operations, components, parts, or a combination thereof.

Some embodiments of the present disclosure may be represented by functional block components and various processing operations. Some or all of the functional blocks may be implemented by any number of hardware and/or software elements that perform particular functions. For example, the functional blocks of the present disclosure may be embodied by at least one microprocessor or by circuit components for a certain function. In addition, for example, the functional blocks of the present disclosure may be implemented by using various programming or scripting languages. The functional blocks may be implemented by using various algorithms executable by one or more processors. In addition, the present disclosure may employ known technologies for electronic settings, signal processing, and/or data processing. Terms such as "mechanism", "element", "unit", or "component" are used in a broad sense and are not limited to mechanical or physical components.

In addition, connection lines or connection members between components illustrated in the drawings are merely exemplary of functional connections and/or physical or circuit connections. Various alternative or additional functional connections, physical connections, or circuit connections between components may be present in a practical device.

In the present disclosure, an "identity authentication system" may refer to a system that may be provided to ensure compliance with security requirements for specific procedures where access is permitted only to authorized users. In the present disclosure, a user may use or access an identity authentication system through an identity authentication device. To allow a user to use or access an identity authentication system according to the present disclosure, an identity authentication solution, such as an identity authentication application, may be provided to the user and may be installed on an identity authentication device.

In the present disclosure, "biometric data" may refer to data relating to a user's body or to a product generated through the use of the user's body, which may be used for user identification. In the present disclosure, biometric data encompasses any type of biometric data. For example, biometric data may be any one of, or a combination of two or more of, various types of biometric data, such as a user's fingerprint, pupil, iris, retina, face, voice, vein, deoxyribonucleic acid (DNA), signature, handwriting, eye-blinking pattern, skeletal structure, ear shape, palm pattern, body temperature pattern, gait pattern, heart rate pattern, electrocardiogram pattern, lip shape and movement, tongue shape and movement, brainwave pattern, finger joint shape, skin pattern and texture, kinetic signature, neural network pattern, muscle pattern, blood flow pattern, tear composition, breathing pattern, or facial blood flow pattern.

In the present disclosure, "authentication-purpose biometric data" may refer to biometric data serving as a means of identity authentication, which is collected for identity authentication. In other words, this term refers to biometric data that a user attempting identity authentication permits to be input or collected for the identity authentication, and may be used to denote data collected by a specific device. A user attempting identity authentication may provide authentication-purpose biometric data or consent to collection of authentication-purpose biometric data, for the purpose of gaining access to a restricted procedure through identity authentication. The type of authentication-purpose biometric data to be used for performing identity authentication may be preset by a user or the system.

In the present disclosure, "registered biometric data" may refer to biometric data that a user has registered or stored on the user's device, i.e., an identity authentication device. Registered biometric data may serve as reference data for determining whether authentication-purpose biometric data matches data of a user attempting identity authentication. The type of registered biometric data may be identical to the type of authentication-purpose biometric data. When the authentication-purpose biometric data matches the registered biometric data, the identity authentication will be successful and access to the restricted procedure may be granted.

In an embodiment, registered biometric data may be collected through an identity authentication device, a component thereof, or a device electrically or communicatively connected thereto, and stored on the identity authentication device. For example, a user may store registered biometric data on the identity authentication device by inputting the user's biometric data via a data input device provided on the identity authentication device, such as a camera or a fingerprint input device.

In another embodiment, registered biometric data may be collected through an identity authentication requesting device and stored on an identity authentication device. In some embodiments, registered biometric data may be collected through an identity authentication requesting device, transmitted to an identity authentication device (or to the identity authentication device via a server), and stored on the identity authentication device. Registered biometric data stored through this procedure may also be subsequently used to perform an identity authentication procedure of a system according to the present disclosure. For example, for initial authentication to use the identity authentication system, the identity authentication device may collect data as the user's 'registered biometric data', and subsequently, when the user attempts identity authentication to use the identity authentication system, the identity authentication device may collect data as the user's 'authentication-purpose biometric data'. The specifications of sensors used to collect data may differ between devices even for the same type of registered biometric data (e.g., facial data), and thus, according to the present embodiment, the accuracy of verifying a match between the registered biometric data and the authentication-purpose biometric data may be improved.

In an embodiment, a user confirmation procedure may be performed in order for the registered biometric data to be stored on the identity authentication device. The user confirmation procedure is a required procedure for using and accessing the identity authentication system of the present disclosure, and may be understood as a type of service subscription procedure. In an embodiment, only users who have completed the user confirmation procedure may store registered biometric data on their terminals, or only user terminals that have performed the user confirmation procedure may store registered biometric data.

In an embodiment, the user confirmation procedure may include an identification card verification procedure.

In an embodiment, the identification card verification procedure may include an identification card authenticity verification procedure. The identification card authenticity verification procedure may be a procedure for verifying whether an identification card presented by the user is counterfeit. The identification card authenticity verification procedure may be performed by capturing an image of an identification card through a camera or sensor of a user terminal. For example, the capturing of an image of the identification card and the identification card authenticity verification procedure may be performed through an identity authentication solution, such as an identity authentication application.

In an embodiment, the identification card verification procedure may include an identification card matching procedure. The identification card matching procedure may be a procedure for verifying whether an identification card presented by a user actually belongs to that user. The identification card matching procedure may be performed by capturing an image of a user's face through a camera or sensor of a user terminal. For example, the capturing of an image of the user's face and the identification card matching procedure may be performed through an identity authentication solution, such as an identity authentication application.

Hereinafter, authentication schemes of the present disclosure will be described.

The identity authentication system of the present disclosure may be based on various authentication schemes, depending on the entity that determines whether there is a match in biometric data.

First, the identity authentication system of the present disclosure may be based on a user terminal authentication scheme (or an identity authentication device authentication scheme). The user terminal authentication scheme may refer to a scheme in which a user terminal, i.e., an identity authentication device, determines whether there is a match between authentication-purpose biometric data and registered biometric data. The user terminal may compare authentication-purpose biometric data received from another device with registered biometric data stored on the user terminal, to determine whether there is a match between the authentication-purpose biometric data and the registered biometric data. Here, the other device may be any one of an identity authentication requesting device, a server, and a third-party device. The user terminal may transmit a result value of the comparison to another device (which may be the aforementioned "other device"), and the device having received the result value may, based on the result value, allow or deny access to the restricted procedure.

Next, the identity authentication system of the present disclosure may be based on an identity authentication requesting device authentication scheme. The identity authentication requesting device authentication scheme may refer to a scheme in which an identity authentication requesting device determines whether there is a match between authentication-purpose biometric data and registered biometric data. The identity authentication requesting device may compare registered biometric data received from another device with authentication-purpose biometric data collected through the identity authentication requesting device, a component thereof, or a device electrically or communicatively connected thereto, to determine whether there is a match between the authentication-purpose biometric data and the registered biometric data. Here, the other device may be any one of a user terminal (i.e., an identity authentication device), a server, and a third-party device. The identity authentication requesting device may, based on a result value of the comparison, either allow or deny access to the restricted procedure directly, or transmit the result value to another device (which may be the aforementioned "other device") such that the device having received the result value may, based on the result value, allow or deny access to the restricted procedure.

Next, the identity authentication system of the present disclosure may be based on a server authentication scheme. The server authentication scheme may refer to a scheme in which a server determines whether there is a match between authentication-purpose biometric data and registered biometric data. The server may compare authentication-purpose biometric data received from an identity authentication requesting device with registered biometric data received from a user terminal (i.e., an identity authentication device), to determine whether there is a match between the authentication-purpose biometric data and the registered biometric data. The server may, based on a result value of the comparison, either allow or deny access to the restricted procedure directly, or transmit the result value to another device such that the device having received the result value may, based on the result value, allow or deny access to the restricted procedure.

**In** some embodiments, the identity authentication system of the present disclosure may be based on a dedicated identity authentication device authentication scheme. The dedicated identity authentication device authentication scheme may refer to a scheme in which a dedicated identity authentication device determines whether there is a match between authentication-purpose biometric data and registered biometric data. A dedicated identity authentication device may be a device provided separately from a user terminal (or an identity authentication device) or an identity authentication requesting device, and may be separately provided to perform only identity authentication without performing other functions. The dedicated identity authentication device may receive and store registered biometric data from a user terminal, and compare subsequently received authentication-purpose biometric data with the registered biometric data to determine whether there is a match between the authentication-purpose biometric data and the registered biometric data. The dedicated identity authentication device may transmit a result value of the comparison to another device, and the device having received the result value may, based on the result value, allow or deny access to the restricted procedure. Here, the other device may be any one of a user terminal, an identity authentication requesting device, a server, and a third-party device.

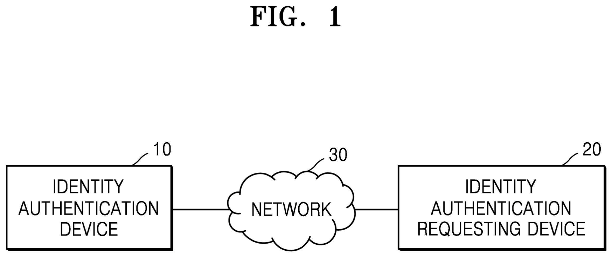

FIG. 1 is a block diagram for describing an identity authentication system according to an embodiment of the present disclosure.

The identity authentication system of the present disclosure may include an identity authentication device 10 and an identity authentication requesting device 20.

In the present disclosure, the identity authentication device 10 may refer to a device owned by a user performing identity authentication. The identity authentication device 10 may be understood as a user terminal, which may include any type of device capable of storing registered biometric data or determining a match between pieces of biometric data through comparison. For example, the identity authentication device 10 may include, but is not limited to, a smart phone, a mobile phone, a tablet personal computer (PC), a PC, a personal digital assistant (PDA), a laptop, a media player, a global positioning system (GPS) device, smart glasses, a smart watch, a device equipped with an input/output interface such as a camera, and other mobile or non-mobile electronic devices.

In the present disclosure, the identity authentication requesting device 20 may refer to a device that requests execution of identity authentication. The identity authentication requesting device 20 may detect a user accessing the identity authentication requesting device 20 (physically or electronically). The identity authentication requesting device 20 may collect authentication-purpose biometric data from the user. The identity authentication requesting device 20 may transmit the authentication-purpose biometric data to another device, or determine a match between pieces of biometric data through comparison. For example, the identity authentication requesting device 20 may include, but is not limited to, a smart phone, a mobile phone, a tablet PC, a PC, a PDA, a laptop, a media player, a GPS device, smart glasses, a smart watch, a wearable device such as a hair band or a ring equipped with communication and data processing functions, a device equipped with an input/output interface such as a camera, and other mobile or non-mobile electronic devices.

In the present disclosure, the identity authentication system may be used to grant access to a restricted procedure exclusively to users who have successfully completed identity authentication. An application of the identity authentication system, i.e., a procedure restricted by the system, may be any procedure that requires security compliance.

For example, the procedure restricted by the identity authentication system may be 'payment', and a mobile payment may be automatically approved for a user who has successfully completed the identity authentication. For example, the procedure restricted by the identity authentication system may be 'entry', and a user who has successfully completed the identity authentication may be granted entry through means such as the opening of an access control gate. For example, in a case in which the procedure restricted by the identity authentication system may be 'vehicle control', a user who has successfully completed the identity authentication may be permitted to control the vehicle, such as starting the engine. For example, in a case in which the procedure restricted by the identity authentication system is 'purchasing an item from a vending machine', a user who has successfully completed the identity authentication may be permitted to purchase an item, such as being able to select an item from the vending machine. In addition to the examples described above, the identity authentication system of the present disclosure may be applied to any procedure that requires security compliance.

In the present disclosure, the identity authentication requesting device 20 may be implemented, like an electronic kiosk, to guide a user through identity authentication for accessing a restricted procedure via user interaction. Accordingly, the identity authentication requesting device 20 may be implemented in various forms depending on the application of the identity authentication system, i.e., the use case.

For example, in a case in which the procedure restricted by the identity authentication system is 'payment', the identity authentication requesting device 20 may be implemented in the form of a point of sales (POS) terminal. For example, in a case in which the procedure restricted by the identity authentication system is 'entry', the identity authentication requesting device 20 may be implemented in the form of an access control gate or an electronic device provided together with an access control gate. For example, in a case in which the procedure restricted by the identity authentication system is 'vehicle control', the identity authentication requesting device 20 may be implemented in the form of an on-board computer mounted in a vehicle. For example, in a case in which the procedure restricted by the identity authentication system is 'purchasing an item from a vending machine', the identity authentication requesting device 20 may be implemented in the form of a vending machine.

In the identity authentication system of the present disclosure, the identity authentication device 10 and the identity authentication requesting device 20 may each transmit and receive data via a network 30. The network 30 may be implemented as a wired network, such as a local area network (LAN), a wide area network (WAN), or a value-added network (VAN), or as a wireless network, such as a mobile radio communication network, a near-field communication network, or a satellite communication network. In addition, the network 30 is a comprehensive data communication network that allows the network entities illustrated in FIG. 1 to communicate seamlessly with each other, and includes any type of wired Internet, wireless Internet, and mobile wireless communication networks.

Although not illustrated in FIG. 1, the identity authentication system may include a server. The server may control the overall operation of the identity authentication system, and the identity authentication system may further include the server for reasons including data storage convenience, data distribution, design constraints, design simplicity, and the like. In an embodiment, instead of transmitting and receiving some or all data directly to and from each other, the identity authentication device 10 and the identity authentication requesting device 20 may transmit and receive the data to and from each other via the server.

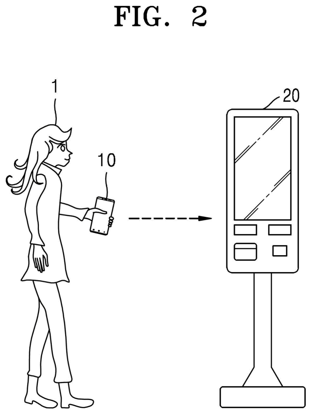

FIG. 2 is a conceptual diagram illustrating an example in which a user performs identity authentication in an identity authentication system, according to an embodiment of the present disclosure.

For the sake of convenience, the example illustrated in FIG. 2 represents a case in which the procedure restricted by the identity authentication system is 'entry', but the present disclosure is not limited thereto.

Referring to FIG. 2, a user 1 may carry the identity authentication device 10. The identity authentication device 10 may store registered biometric data.

The user 1 may approach the identity authentication requesting device 20. For example, the user 1 may approach the identity authentication requesting device 20 to unlock and pass through an access control gate.

The identity authentication requesting device 20 may detect the approach of the user 1. For example, the identity authentication requesting device 20 may detect the approach of the user 1 via a camera or sensor mounted on or connected to the identity authentication requesting device 20. For example, the identity authentication requesting device 20 may detect the approach of the user 1 by transmitting specific data or signal (e.g., an authentication signal to be described below).

Upon detecting the approach of the user 1, the identity authentication requesting device 20 may collect authentication-purpose biometric data of the user 1. The user 1 may input his/her biometric data via a camera, a sensor, or other input/output interface mounted on or connected to the identity authentication requesting device 20.

In a case in which the identity authentication system is based on the user terminal authentication scheme, the identity authentication requesting device 20 may transmit the collected authentication-purpose biometric data to the identity authentication device 10. Upon receiving the authentication-purpose biometric data, the identity authentication device 10 may compare the received authentication-purpose biometric data with the stored registered biometric data. The identity authentication device 10 may generate a result value of the comparison.

In a case in which the identity authentication system is based on the identity authentication requesting device authentication scheme, the identity authentication requesting device 20 may receive the registered biometric data from the identity authentication device 10. The identity authentication requesting device 20 may transmit, to the identity authentication device 10, a signal for requesting the registered biometric data. Upon receiving the signal for requesting the registered biometric data, the identity authentication device 10 may transmit the registered biometric data to the identity authentication requesting device 20. Upon receiving the registered biometric data, the identity authentication requesting device 20 may compare the received registered biometric data with the collected authentication-purpose biometric data. The identity authentication requesting device 20 may generate a result value of the comparison.

In the example of FIG. 2, whether to grant entry to the user 1 may be determined based on the generated result value. For example, when the generated result value indicates that the two pieces of biometric data match, the access control gate may be unlocked for the user 1. For example, when the generated result value indicates that the two pieces of biometric data do not match, the access control gate may remain locked for the user 1.

In some embodiments, the identity authentication system may require an additional authentication procedure in addition to the identity authentication using biometric data. For example, when necessary for security, for example, when the user is attempting to enter an area with a higher security level than those of other areas, or when the user is attempting to pay an amount higher than a preset amount, the identity authentication system may require the user to perform an additional authentication procedure. In an embodiment, the additional authentication procedure may be required only when the registered biometric data and the authentication-purpose biometric data match.

In an embodiment, the additional authentication procedure may include an identification card matching procedure. The identification card matching procedure may be a procedure for verifying whether an identification card presented by a user actually belongs to that user. The identification card matching procedure may include capturing an image of the identification card via a camera or sensor of the identity authentication device 10 or the identity authentication requesting device 20, capturing an image of the user's face, and comparing the image of the identification card with the image of the face.

In the identity authentication system, the method of specifying the identity authentication device 10 may pose a challenge. **In** other words, the challenge may be how to specify the target device to which the identity authentication requesting device 20 is to transmit the collected authentication-purpose biometric data, or from which the identity authentication requesting device 20 is to request registered biometric data.

In an embodiment, the identity authentication requesting device 20 may specify the identity authentication device 10 based on identification information input by the user 1. **In** the present embodiment, the identity authentication requesting device 20 may include an interface that allows the user 1 to input device identification data, and may receive an input of device identification data through the interface. The device identification data may be data used to identify the user's terminal, i.e., an identity authentication device. For example, the device identification data may include at least one of a phone number, a membership number, and a resident registration number.

In another embodiment, the identity authentication requesting device 20 may specify the identity authentication device 10 by detecting the nearest device. In the present embodiment, the identity authentication requesting device 20 may detect the nearest device through any suitable method. For example, the identity authentication requesting device 20 may include a plurality of nodes or channels and may measure the distance to an identity authentication device based on signals transmitted and received between the nodes or channels and the identity authentication device. For example, the plurality of nodes or channels may be nodes or channels for transmitting and receiving a beacon signal.

In another embodiment, the identity authentication requesting device 20 may specify the identity authentication device 10 based on a prearranged sound signal. In the present embodiment, the prearranged sound signal may refer to a sound signal that is detectable by the identity authentication device 10 in the identity authentication system. The identity authentication device 10 may detect a sound signal and determine whether the detected sound signal is the prearranged sound signal transmitted from the identity authentication requesting device 20. Upon determining that the detected sound signal is the prearranged sound signal, the identity authentication device 10 may transmit device identification data of the identity authentication device 10 to the identity authentication requesting device 20 or a server. The identity authentication requesting device 20 may specify the identity authentication device 10 based on the device identification data.

The identity authentication system according to various embodiments described hereinafter enables hands-free identity authentication and presents a method whereby the specification of the identity authentication device 10 is also performed automatically.

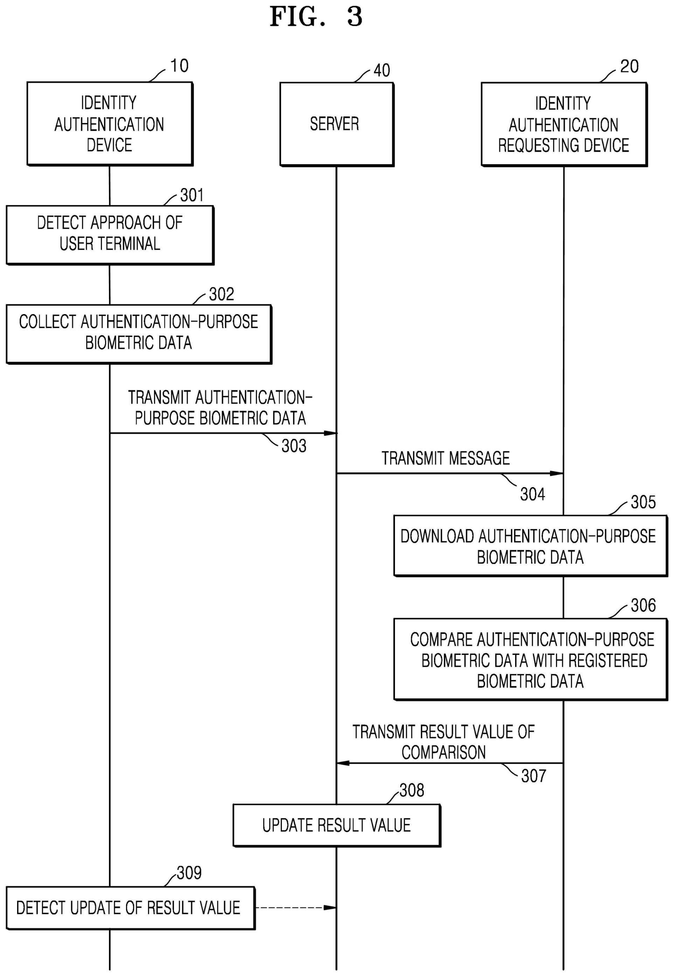

FIG. 3 is a flowchart for describing an identity authentication procedure according to an embodiment of the present disclosure.

The identity authentication procedure illustrated in FIG. 3 relates to an identity authentication system based on the user terminal authentication scheme.

In an embodiment, in operation 301, the identity authentication requesting device 20 may detect an approach of a user terminal.

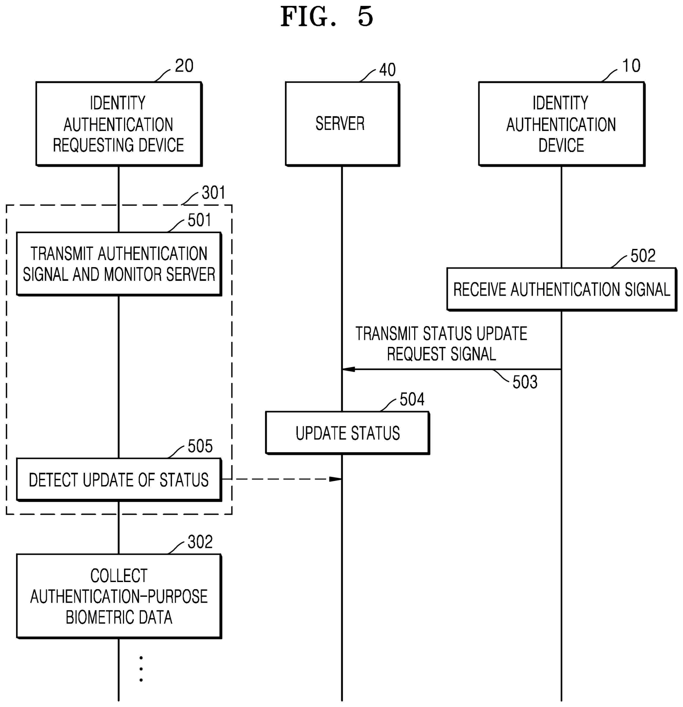

The identity authentication requesting device 20 may detect an approach of a user terminal through any suitable method, and an embodiment of a method of detecting an approach of a user terminal will be described below with reference to FIG. 5.

In an embodiment, in operation 302, the identity authentication requesting device 20 may collect authentication-purpose biometric data.

In response to detecting the approach of the user terminal, the identity authentication requesting device 20 may collect the authentication-purpose biometric data. That is, the collection of the authentication-purpose biometric data may be initiated by the approach of the user terminal.

In an embodiment, in operation 303, the identity authentication requesting device 20 may transmit the collected authentication-purpose biometric data to a server 40.

In an embodiment, the authentication-purpose biometric data transmitted by the identity authentication requesting device 20 to the server 40 may be landmark data.

In an embodiment, based on transmitting the collected authentication-purpose biometric data, the identity authentication requesting device 20 may delete the authentication-purpose biometric data.

In an embodiment, in operation 304, the server 40 may transmit a message to the identity authentication device 10.

In an embodiment, based on receiving the authentication-purpose biometric data from the identity authentication requesting device 20, the server 40 may transmit a message to the identity authentication device 10.

In an embodiment, the message transmitted by the server 40 to the identity authentication device 10 may be a message about the collection of the authentication-purpose biometric data. As will be described below, the message transmitted by the server 40 to the identity authentication device 10 may be a message that instructs or guides the identity authentication device 10 to download the authentication-purpose biometric data from the server 40 (305).

In an embodiment, the message transmitted by the server 40 to the identity authentication device 10 may be a push notification or a push message. The server 40 may transmit the message to the identity authentication device 10 based on any suitable environment or service for transmitting push notifications or push messages. For example, the server 40 may transmit the message to the identity authentication device 10 based on a Firebase Cloud Messaging (FCM) service, but the present disclosure is not limited thereto.

In an embodiment, in operation 305, the identity authentication device 10 may download the authentication-purpose biometric data.

In an embodiment, based on receiving the message from the server40, the identity authentication device 10 may download the authentication-purpose biometric data from the server 40. The authentication-purpose biometric data downloaded by the identity authentication device 10 may be identical to the authentication-purpose biometric data that has been transmitted from the identity authentication requesting device 20 to the server 40.

In an embodiment, in operation 306, the identity authentication device 10 may compare the authentication-purpose biometric data with registered biometric data.

In an embodiment, the identity authentication device 10 may compare the authentication-purpose biometric data downloaded from the server 40 with the registered biometric data stored on the identity authentication device 10. The identity authentication device 10 may compare the authentication-purpose biometric data with the registered biometric data to determine whether there is a match between the authentication-purpose biometric data and the registered biometric data.

In an embodiment, the identity authentication device 10 may determine that the authentication-purpose biometric data and the registered biometric data match when a match rate between them is greater than or equal to a preset value, and may determine that they do not match when the match rate is less than the preset value.

In an embodiment, after operation 306, the downloaded authentication-purpose biometric data may be deleted. In other words, the downloaded authentication-purpose biometric data is single-use data and may be deleted immediately after being compared with the registered biometric data.

In an embodiment, in operation 307, the identity authentication device 10 may transmit a result value of the comparison to the server 40.

The result of the comparison performed by the identity authentication device 10 between the authentication-purpose biometric data and the registered biometric data may be either match or non-match, and accordingly, the result value of the comparison may be a value corresponding to either match or non-match.

In an embodiment, in operation 308, the server 40 may update the result value.

In an embodiment, based on receiving the result value from the identity authentication device 10, the server 40 may update the result value.

In an embodiment, based on receiving the authentication-purpose biometric data from the identity authentication requesting device 20 in operation 303, the server 40 may configure a data structure for updating a result value that corresponds to the received authentication-purpose biometric data. Subsequently, upon receiving the result value of the comparison from the identity authentication device 10 in operation 307, the server 40 may update the result value based on the configured data structure.

In an embodiment, in operation 309, the identity authentication requesting device 20 may detect the update of the result value on the server.

In an embodiment, after operation 301, 302, or 303, the identity authentication requesting device 20 may monitor the server 40. By monitoring the server 40, the identity authentication requesting device 20 may detect the server 40 updating the result value, and retrieve the updated result value.

After operation 309, the identity authentication requesting device 20 may determine whether to allow or deny access to the restricted procedure, based on the updated result value.

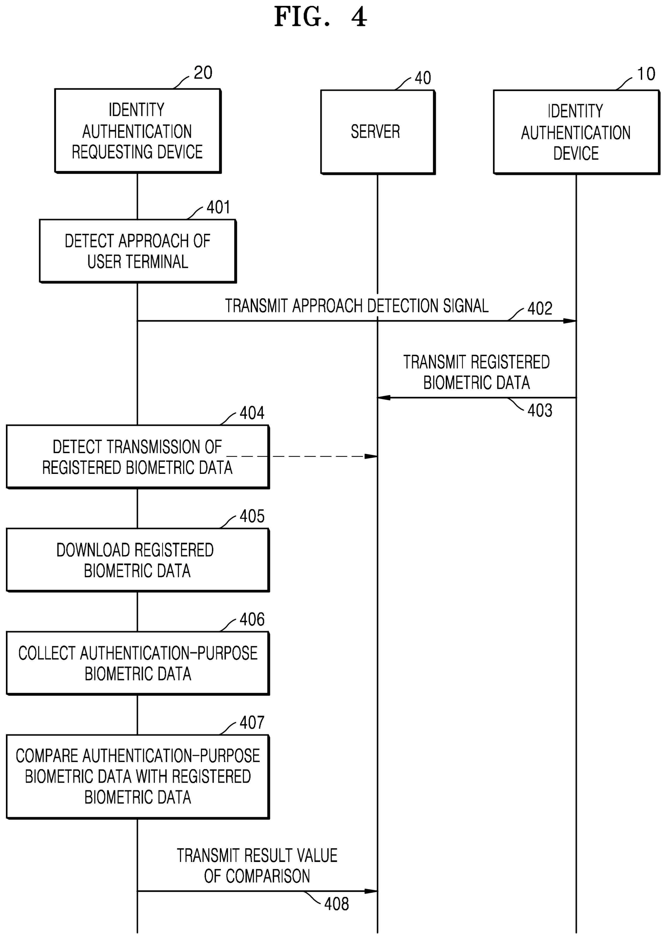

FIG. 4 is a flowchart for describing an identity authentication procedure according to another embodiment of the present disclosure.

The identity authentication procedure illustrated in FIG. 4 relates to an identity authentication system based on the identity authentication requesting device authentication scheme.

With respect to the embodiments described above in reference to FIG. 3, detailed descriptions will be omitted for those aspects that may be applied in the same manner or by analogy to the embodiments illustrated in FIG. 4.

In an embodiment, in operation 401, the identity authentication requesting device 20 may detect an approach of a user terminal.

In an embodiment, in operation 402, the identity authentication requesting device 20 may transmit an approach detection signal to the identity authentication device 10.

In an embodiment, based on detecting the approach of the user terminal, the identity authentication requesting device 20 may transmit the approach detection signal. The approach detection signal may be a signal that may serve to inform the identity authentication device 10 that the identity authentication requesting device 20 has detected the approach of the user terminal.

In an embodiment, in operation 403, the identity authentication device 10 may transmit registered biometric data to the server 40.

In an embodiment, based on receiving the approach detection signal, the identity authentication device 10 may transmit the registered biometric data to the server 40. In response to receiving the approach detection signal, the identity authentication device 10 may determine to perform a procedure for transmitting the registered biometric data.

In an embodiment, in operation 404, the identity authentication requesting device 20 may detect the transmission of the registered biometric data.

In an embodiment, after operation 401 or 402, the identity authentication requesting device 20 may monitor the server 40. By monitoring the server 40, the identity authentication requesting device 20 may detect that the identity authentication device 10 is transmitting the registered biometric data, i.e., that the server 40 is receiving the registered biometric data.

In an embodiment, in operation 405, the identity authentication requesting device 20 may download the registered biometric data.

The registered biometric data downloaded by the identity authentication requesting device 20 may be identical to the registered biometric data that has been transmitted from the identity authentication device 10 to the server 40.

In an embodiment, in operation 406, the identity authentication requesting device 20 may collect authentication-purpose biometric data.

In an embodiment, in operation 407, the identity authentication requesting device 20 may compare the authentication-purpose biometric data with the registered biometric data.

In an embodiment, in operation 408, the identity authentication requesting device 20 may transmit a result value of the comparison to the server 40.

In an embodiment, after operation 408, the server 40 may update the result value.

In an embodiment, after operation 408, the identity authentication requesting device 20 may determine, based on the result value of the comparison, whether to allow or deny access to the restricted procedure.

FIG. 5 is a flowchart for describing a process in which an identity authentication requesting device detects an approach of a user terminal, according to an embodiment of the present disclosure.

FIG. 5 illustrates a detailed implementation of operation 301 described above with reference to FIG. 3.

In an embodiment, in operation 501, the identity authentication requesting device 20 may transmit an authentication signal and monitor the server 40.

In an embodiment, the identity authentication requesting device 20 may transmit the authentication signal for the purpose of detecting an approach of the identity authentication device 10 or a user. The authentication signal may be a signal configured to cause the identity authentication device 10 to perform a corresponding operation in response to receiving the authentication signal. Here, the corresponding operation may be, as will be described below, transmitting a status update request signal.

In an embodiment, the identity authentication requesting device 20 may monitor the server 40 for the purpose of detecting a change in specific data on the server 40. As will be described below, by monitoring the server 40, the identity authentication requesting device 20 may detect that a status related to the identity authentication device 10 has been updated, and accordingly, detect that the identity authentication device 10 or a user has approached.

In an embodiment, in operation 502, the identity authentication device 10 may receive the authentication signal.

In an embodiment, the identity authentication device 10 may receive the authentication signal transmitted by the identity authentication requesting device 20. The identity authentication device 10 may include an interface capable of receiving an authentication signal transmitted by the identity authentication requesting device 20.

As described above, to allow a user to use or access an identity authentication system according to the present disclosure, an identity authentication solution, such as an identity authentication application, may be provided to the user and may be installed on an identity authentication device. In an embodiment, when the user executes the identity authentication application installed on the identity authentication device 10, the identity authentication device 10 may transition to a state capable of receiving an authentication signal.

In an embodiment, when the identity authentication application is running, information may be provided on the identity authentication device 10 of the user, indicating that the identity authentication application is running such that the user or the identity authentication device 10 of the user is able to use the identity authentication system. For example, a notification object may be displayed on the identity authentication device 10 of the user, indicating that the identity authentication application is running. This notification object may be an object that is displayed continuously, rather than temporarily, unless intentionally dismissed by the user. The present embodiment may be implemented as a foreground service provided by the operating system of the identity authentication device 10.

In an embodiment, access to the identity authentication system may be provided even when the identity authentication application is not active. In other words, the identity authentication application may perform tasks even when it is not active.

The identity authentication application of the present disclosure may transition the identity authentication device 10 to a state capable of receiving an authentication signal, and may also enable all or some of the identity authentication procedures described in the present disclosure to be performed. For example, in operation 305 described above, the identity authentication application may cause the identity authentication device 10 to download the authentication-purpose biometric data.

In an embodiment, in operation 503, the identity authentication device 10 may transmit a status update request signal to the server 40.

In an embodiment, in response to receiving the authentication signal, the identity authentication device 10 may transmit the status update request signal. The status update request signal may be a signal for notifying the server 40 that the authentication signal has been received, thereby requesting the server 40 to update the status of the identity authentication device 10. The identity authentication device 10 may include an interface capable of transmitting a status update request signal.

In an embodiment, the transmission of the status update request signal by the identity authentication device 10 may trigger collection of authentication-purpose biometric data by the identity authentication requesting device 20. As will be described below, in response to the transmission of the status update request signal from the identity authentication device 10, the server 40 updates the status, and the identity authentication requesting device 20 may detect this status update on the server 40.

In an embodiment, in operation 504, the server 40 may update the status of the identity authentication device 10.

In an embodiment, based on receiving the status update request signal from the identity authentication device 10, the server 40 may update the status corresponding to the identity authentication device 10.

In an embodiment, in operation 505, the identity authentication requesting device 20 may detect the update of the status.

As described above, the identity authentication requesting device 20 may monitor the server 40 to detect a change in specific data on the server 40, wherein the change in the specific data may relate to the status of the identity authentication device 10 that is updated by the server 40.

As described above with reference to FIG. 3, in operation 302, the identity authentication requesting device 20 may collect authentication-purpose biometric data, and the collection of the authentication-purpose biometric data by the identity authentication requesting device 20 may be performed based on the detection of the status update in operation 505.

The process described above with reference to FIG. 5, in which the identity authentication requesting device detects an approach of a user terminal, may also be applied to the embodiments described above with reference to FIG. 4. In detail, the embodiments described above with reference to FIG. 5 may also be applied to operation 401 of FIG. 4.

According to the embodiments illustrated in FIGS. 3 and 5, an issue related to specifying the identity authentication device 10 may not arise, even when a plurality of users approach. This will be described in detail as follows.

As described above, the identity authentication requesting device 20 may transmit an authentication signal, and all user terminals having received the authentication signal may each transmit a status update request signal to the server 40. The server 40 may update statuses for the user terminals corresponding to the received status update request signals, respectively.

As described above, the identity authentication requesting device 20 may detect a status update by the server 40 and collect authentication-purpose biometric data. The identity authentication requesting device 20 may collect authentication-purpose biometric data of only one user. In other words, the collection of the authentication-purpose biometric data may be performed only once.

As described above, the identity authentication requesting device 20 may transmit the single piece of collected authentication-purpose biometric data to the server 40, and the server 40 may transmit a message based on receiving the authentication-purpose biometric data. In an embodiment, the server 40 may transmit the message to all user terminals that have received the transmitted authentication signal, i.e., all user terminals that have transmitted the status update request signals to the server 40. Each of the user terminals having received the message may download the authentication-purpose biometric data from the server 40.

Each of the user terminals may compare the downloaded authentication-purpose biometric data with its own registered biometric data, and transmit a result value of the comparison to the server 40. In this process, at most one user terminal may transmit a result value corresponding to a match.

Through the process described above, an issue related to specifying the identity authentication device 10 may be prevented. Furthermore, as described above, security may also be maintained because the downloaded authentication-purpose biometric data may be deleted immediately after being compared with the registered biometric data.

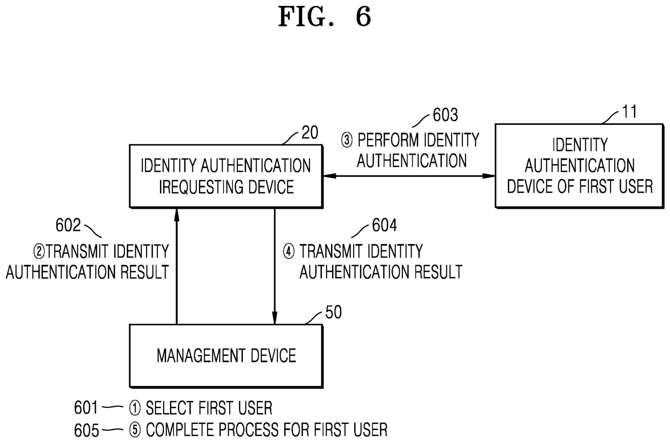

FIG. 6 is a conceptual diagram for describing an example of utilization of an identity authentication system, according to an embodiment of the present disclosure.

Referring to FIG. 6, the identity authentication system may include an identity authentication device 11 of a first user and the identity authentication requesting device 20, and may further include a management device 50. The management device 50 may refer to a device used by an administrator who manages the identity authentication system. The management device 50 may be a part of the identity authentication requesting device 20 or the same device as the identity authentication requesting device 20; however, the embodiment illustrated in FIG. 6 will be described on the premise that the management device 50 is a device separate from the identity authentication requesting device 20. Although not illustrated in FIG. 6, the identity authentication system may include a server.

For example, the identity authentication system illustrated in FIG. 6 may be applied in a restaurant, the procedure restricted by the identity authentication system may be 'payment', and the management device 50 may be understood as a device (e.g., a POS terminal) used by a restaurant employee.

Referring to FIG. 6, an administrator may select the first user through the management device 50 (601).

For example, after the first user finishes dining, an employee may select the first user through the POS terminal to process payment for the food consumed by the first user.

Referring to FIG. 6, the management device 50 may transmit an identity authentication execution request signal to the identity authentication requesting device 20 (602).

For example, the POS terminal may instruct the identity authentication requesting device 20 to initiate an identity authentication procedure.

Referring to FIG. 6, the identity authentication requesting device 20 and the identity authentication device 11 of the first user may perform identity authentication (603).

The embodiments described above with reference to FIGS. 1 to 5 may be applied to the identity authentication performed by the identity authentication requesting device 20 and the identity authentication device 11 of the first user.

Referring to FIG. 6, the identity authentication requesting device 20 may transmit an identity authentication result to the management device 50 (604).

For example, the identity authentication requesting device 20 may transmit, to the POS terminal, information that the identity authentication of the first user has been successful.

Referring to FIG. 6, the management device 50 may complete the processing for the first user (605).

For example, based on receiving information that the identity authentication of the first user has been successful, the POS terminal may complete the payment process for the first user.

Through the process described above with reference to FIG. 6, payment may be made without the presentation of a card, an input of a password, or communication between the employee and the first user.

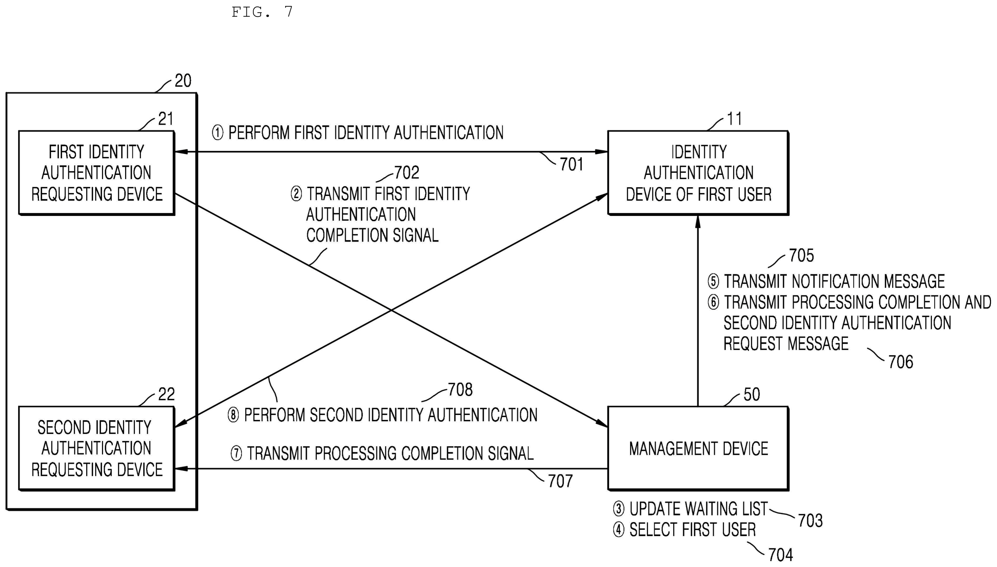

FIG. 7 is a conceptual diagram for describing an example of utilization of an identity authentication system, according to another embodiment of the present disclosure.

Referring to FIG. 7, the identity authentication system may include an identity authentication device 11 of a first user and identity authentication requesting devices 20, and may further include the management device 50. As in FIG. 6, the management device 50 may refer to a device used by an administrator who manages the identity authentication system. The management device 50 may be a part of the identity authentication requesting device 20 or the same device as the identity authentication requesting device 20; however, the embodiment illustrated in FIG. 7 will be described on the premise that the management device 50 is a device separate from the identity authentication requesting device 20. Although not illustrated in FIG. 7, the identity authentication system may include a server.

In the embodiment illustrated in FIG. 7, the identity authentication requesting devices 20 may include a first identity authentication requesting device 21 and a second identity authentication requesting device 22. The first identity authentication requesting device 21 and the second identity authentication requesting device 22 may be devices that perform different functions. For example, the first identity authentication requesting device 21 may be a device for restricting a user's entry or managing persons entering and exiting, and the second identity authentication requesting device 22 may be a device for processing a user's payment. The first identity authentication requesting device 21 may be the same device as the second identity authentication requesting device 22; however, for ease of understanding, the embodiment illustrated in FIG. 7 will be described on the premise that the first identity authentication requesting device 21 and the second identity authentication requesting device 22 are separate devices.

For example, the identity authentication system illustrated in FIG. 7 may be applied in a hospital, wherein the first identity authentication requesting device 21 is a device that performs visitor registration, the second identity authentication requesting device 22 is a device that processes payments, and the management device 50 may be understood as a device used by a hospital staff member, such as a nurse.

Referring to FIG. 7, the first identity authentication requesting device 21 and the identity authentication device 11 of the first user may perform first identity authentication (701).

For example, the first user may be a patient, and the first identity authentication may be authentication for the first user to register for a doctor's appointment.

The embodiments described above with reference to FIGS. 1 to 5 may be applied to the first identity authentication performed by the first identity authentication requesting device 21 and the identity authentication device 11 of the first user.

Referring to FIG. 7, the first identity authentication requesting device 21 may transmit a first identity authentication completion signal to the management device 50 (702).

For example, the first identity authentication requesting device 21 may transmit, to the management device 50, information that the identity authentication of the first user has been successful.

Referring to FIG. 7, based on receiving the first identity authentication completion signal, the management device 50 may update a waiting list (703).

In an embodiment, the management device 50 may update the waiting list based on information about the first user.

For example, based on receiving the first identity authentication completion signal indicating that the identity authentication of the first user has been successful, the management device 50 may add the first user to the waiting list.

Referring to FIG. 7, a staff member may select the first user through the management device 50 (704).

For example, when it is nearly the first user's turn for consultation, the staff member may select the first user via the management device 50 to have the first user enter a consultation room.

Referring to FIG. 7, the management device 50 may transmit a notification message to the identity authentication device 11 of the first user (705).

For example, the management device 50 may transmit a notification message about the consultation to the identity authentication device 11 of the first user (which is the first user's terminal), such that the first user may enter the consultation room without requiring a staff member to call out the first user's name or guide the first user in.

Referring to FIG. 7, the management device 50 may transmit a processing completion and second identity authentication request message (706).

For example, after the first user's consultation is finished, the staff member may transmit a message via the management device 50 to inform the first user that the consultation is complete and to request identity authentication for processing payment of medical fees.

Referring to FIG. 7, the management device 50 may transmit a processing completion signal to the second identity authentication requesting device 22 (707).

For example, by transmitting, to the second identity authentication requesting device 22, a signal indicating that the first user's consultation is complete, the management device 50 may instruct the second identity authentication requesting device 22 to perform identity authentication.

Referring to FIG. 7, the second identity authentication requesting device 22 and the identity authentication device 11 of the first user may perform second identity authentication (708).

For example, the second identity authentication may be authentication for the first user to pay medical fees.

Through the process described above with reference to FIG. 7, consultation and payment may be performed without the patient presenting an identification card, presenting a card, entering a password, or communicating with a staff member.

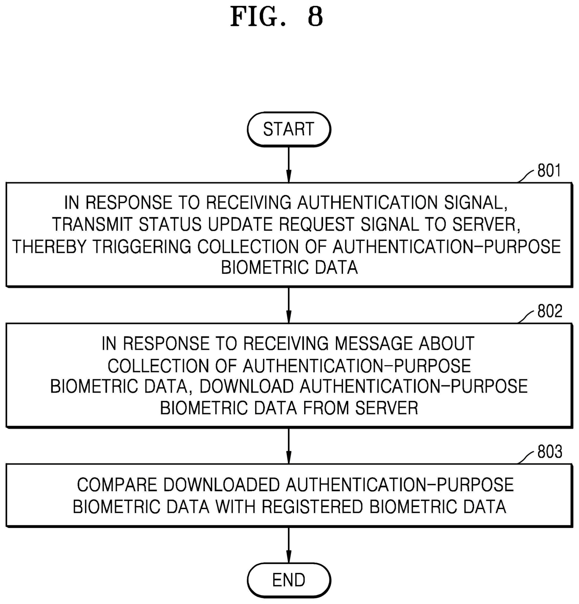

FIG. 8 is a flowchart of an identity authentication method according to an embodiment of the present disclosure.

The operations illustrated in FIG. 8 may be performed by an identity authentication device or a processor of the identity authentication device.

Referring to FIG. 8, in operation 801, in response to receiving an authentication signal, the identity authentication device may transmit a status update request signal to a server, thereby triggering collection of authentication-purpose biometric data.

In an embodiment, the authentication signal may be transmitted by an identity authentication requesting device.

In an embodiment, in response to the status update request signal, the status of the identity authentication device may be updated, and the update of the status may be detected by the identity authentication requesting device.

Referring to FIG. 8, in operation 802, in response to receiving a message about the collection of the authentication-purpose biometric data, the identity authentication device may download the authentication-purpose biometric data from the server.

In an embodiment, the message may be a push message.

Referring to FIG. 8, in operation 803, the identity authentication device may compare the downloaded authentication-purpose biometric data with registered biometric data.

In an embodiment, the downloaded authentication-purpose biometric data may be deleted after comparing the downloaded authentication-purpose biometric data with the registered biometric data.

In an embodiment, after operation 803, the identity authentication device may transmit a result value of the comparison to the server.

In an embodiment, the result value is updated by the server and may be detected by the identity authentication requesting device monitoring the server.

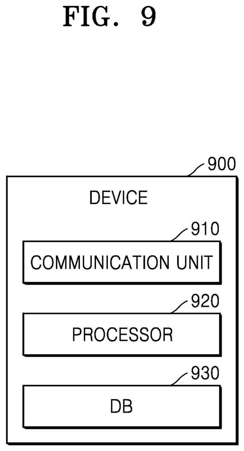

FIG. 9 is a block diagram of a device according to an embodiment of the present disclosure.

A device 900 illustrated in FIG. 9 may be at least one of the above-described identity authentication device 10, identity authentication requesting device 20, and server 40.

Referring to FIG. 9, the device 900 may include a communication unit 910, a processor 920, and a database (DB) 930. FIG. 9 illustrates the device 900 including only the components related to an embodiment. Therefore, it would be understood by those of skill in the art that other general-purpose components may be further included in addition to those illustrated in FIG. 9.

The communication unit 910 may include one or more components that enable wired/wireless communication with an external server or an external device. For example, the communication unit 910 may include at least one of a short-range communication unit (not shown), a mobile communication unit (not shown), and a broadcast receiver (not shown).

The DB 930 is hardware for storing various pieces of data processed by the device 900, and may store a program for the processor 920 to perform processing and control. The DB 930 may store payment information, user information, and the like.

The DB 930 may include random-access memory (RAM) such as dynamic RAM (DRAM) or static RAM (SRAM), read-only memory (ROM), electrically erasable programmable ROM (EEPROM), a compact disc-ROM (CD-ROM), a Blu-ray or other optical disk storage, a hard disk drive (HDD), a solid-state drive (SSD), or flash memory.

The processor 920 controls the overall operation of the device 900. For example, the processor 920 may execute programs stored in the DB 930 to control the overall operation of an input unit (not shown), a display (not shown), the communication unit 910, the DB 930, and the like. The processor 920 may execute programs stored in the DB 930 to control the operation of the device 900.

The processor 920 may control at least some of the operations of the device 900 described above with reference to FIGS. 1 to 8.

The processor 920 may be implemented by using at least one of application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, and other electrical units for performing functions.

In an embodiment, the device 900 may be a mobile electronic device. For example, the device 900 may be implemented as a smart phone, a tablet PC, a PC, a smart television (TV), a PDA, a laptop, a media player, a navigation system, a camera-equipped device, and other mobile electronic devices. In some embodiments, the device 900 may be implemented as a wearable device having a communication function and a data processing function, such as a watch, glasses, a hair band, a ring, or the like.

An embodiment of the present disclosure may be implemented as a computer program that may be executed through various components on a computer, and such a computer program may be recorded in a computer-readable medium. In this case, the medium may include a magnetic medium, such as a hard disk, a floppy disk, or a magnetic tape, an optical recording medium, such as a CD-ROM or a digital versatile disc (DVD), a magneto-optical medium, such as a floptical disk, and a hardware device specially configured to store and execute program instructions, such as ROM, RAM, or flash memory.

In addition, the computer program may be specially designed and configured for the present disclosure or may be well-known to and usable by those skilled in the art of computer software. Examples of the computer program may include not only machine code, such as code made by a compiler, but also high-level language code that is executable by a computer by using an interpreter or the like.

According to an embodiment, the method according to various embodiments of the present disclosure may be included in a computer program product and provided. The computer program product may be traded as a commodity between sellers and buyers. The computer program product may be distributed in the form of a machine-readable storage medium (e.g., a CD-ROM), or may be distributed online (e.g., downloaded or uploaded) through an application store (e.g., Play Store^{™}) or directly between two user devices. In a case of online distribution, at least a portion of the computer program product may be temporarily stored in a machine-readable storage medium such as a manufacturer's server, an application store's server, or a memory of a relay server.

The operations of the methods according to the present disclosure may be performed in any suitable order unless otherwise indicated herein or otherwise clearly contradicted by context. The present disclosure is not limited to the described order of the operations. The use of any and all examples, or exemplary language (e.g., 'and the like') provided herein, is intended merely to better illuminate the present disclosure and does not pose a limitation on the scope of the present disclosure unless otherwise claimed. Also, numerous modifications and adaptations will be readily apparent to those skilled in the art without departing from the spirit and scope of the present disclosure.

Accordingly, the spirit of the present disclosure should not be limited to the above-described embodiments, and all modifications and variations which may be derived from the meanings, scopes and equivalents of the claims should be construed as falling within the scope of the present disclosure.

According to various embodiments of the present disclosure, an identity authentication system may be provided that increases user convenience while maintaining a high level of security.

In particular, the time required for identity authentication may be significantly reduced, and a high level of satisfaction may be provided to those who experience the identity authentication system of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. An identity authentication method performed by an identity authentication device, the identity authentication method comprising:
in response to receiving an authentication signal, transmitting a status update request signal to a server to trigger collection of authentication-purpose biometric data;
in response to receiving a message about the collection of the authentication-purpose biometric data, downloading the authentication-purpose biometric data from the server; and
comparing downloaded authentication-purpose biometric data with registered biometric data.

2. The identity authentication method of claim 1, further comprising transmitting a result value of the comparison to the server.

3. The identity authentication method of claim 2, wherein the result value is updated by the server and is detected by an identity authentication requesting device monitoring the server.

4. The identity authentication method of claim 1, wherein the message is a push message.

5. The identity authentication method of claim 1, wherein the authentication signal is transmitted by an identity authentication requesting device.

6. The identity authentication method of claim 1, wherein a status of the identity authentication device is updated by the status update request signal, and
the updating of the status is detected by an identity authentication requesting device.

7. The identity authentication method of claim 1, the authentication-purpose biometric data is deleted after the downloaded authentication-purpose biometric data is compared with the registered biometric data.

8. An identity authentication device comprising:
a memory storing at least one program; and
a processor configured to execute the at least one program to transmit, in response to receiving an authentication signal, a status update request signal to a server to trigger collection of authentication-purpose biometric data, download, in response to receiving a message about the collection of the authentication-purpose biometric data, the authentication-purpose biometric data from the server, and compare downloaded authentication-purpose biometric data with registered biometric data.

9. A computer-readable recording medium having recorded thereon a program for causing a computer to execute the identity authentication method of claim 1.
